# EUROPEAN PATENT APPLICATION

(11) **EP 4 748 896 A1**
(43) Date of publication of application: **27.05.2026**
(21) Application number: 24842767.6
(22) Date of filing: 22.03.2024
(51) Int. Cl.: C09J 5/00, B29C 65/50, C09J 7/30, C09J 201/00

(54) **METHOD FOR AFFIXING FILM ADHESIVE MATERIAL AND DEVICE FOR AFFIXING FILM ADHESIVE MATERIAL**

(30) Priority: 18.07.2023 JP 2023116931
(71) Applicant: Resonac Corporation, Tokyo 105-7325 (JP)
(72) Inventor: SHODA, Hiroaki, Tokyo 105-7325 (JP); YAMASHITA, Takahiro, Tokyo 105-7325 (JP); ITO, Seiichi, Tokyo 105-7325 (JP); FUKUKAWA, Yuji, Tokyo 105-7325 (JP)
(74) Representative: Berggren Oy
(86) International application number: PCT/JP2024/011412
(87) International publication number: WO 2025/017966

(57) **Abstract**

A film adhesive material affixing method includes a step of wrapping one film adhesive material over one end face and both plate surfaces of a heated plate member extending in one direction, a step of pressing the one film adhesive material against both of the plate surfaces, a step of pressing the one film adhesive material against the one end face, a step of wrapping another film adhesive material over another end face and both of the plate surfaces of the heated plate member and overlapping the other film adhesive material and the one film adhesive material on both of the plate surfaces, a step of pressing the other film adhesive material against both of the plate surfaces, and a step of pressing the other film adhesive material against the other end face.

## Description

### Technical Field

The present disclosure relates to a film adhesive material affixing method and a film adhesive material affixing device.

### Background Art

A seal structure disclosed in Japanese Patent Application Laid-Open (JP-A) No. 2021-89881 includes a plate-shaped conductor, a through hole through which the conductor is inserted, a recess that extends from the through hole in a direction orthogonal to an axial direction of the through hole and surrounds the through hole, and a hole that extends in a first direction orthogonal to the axial direction of the through hole and communicates the through hole, the recess, and an external space, and the seal member includes a holding member that holds the conductor inserted into the through hole, a first seal portion that seals between the recess and the conductor, and a second seal portion that closes the hole.

### SUMMARY OF INVENTION

### Technical Problem

Conventionally, in the case of joining different types of members, in a state in which a film adhesive material is stuck to one member, another member might be joined to the one member. When the film adhesive material is stuck to one member, an operator only wraps the film adhesive material over the member. Therefore, when the film adhesive material is stuck to the member, air bubbles might enter between the film adhesive material and the member.

A problem of the disclosure is to suppress air bubbles from entering between the film adhesive material and the member when affixing the film adhesive material to the member.

### Solution to Problem

A film adhesive material affixing method according to a first aspect of the disclosure includes a step of wrapping one film adhesive material over one end face and both plate surfaces of a heated plate member extending in one direction, a step of pressing the one film adhesive material against both of the plate surfaces, a step of pressing the one film adhesive material against the one end face, a step of wrapping another film adhesive material over another end face and both of the plate surfaces of the heated plate member and overlapping the other film adhesive material and the one film adhesive material on both of the plate surfaces, a step of pressing the other film adhesive material against both of the plate surfaces, and a step of pressing the other film adhesive material against the other end face.

The film adhesive material affixing method according to a second aspect of the disclosure is the film adhesive material affixing method according to the first aspect, in which at the step of pressing the one film adhesive material against both of the plate surfaces and the step of pressing the other film adhesive material against both of the plate surfaces, the one film adhesive material and the other film adhesive material are pressed against both of the plate surfaces by causing the plate member to pass through a clamping portion of a pair of rollers.

The film adhesive material affixing method according to a third aspect of the disclosure is the film adhesive material affixing method according to the second aspect, in which the one film adhesive material and the other film adhesive material are pressed against both of the plate surfaces by biasing the pair of rollers toward the plate member.

A film adhesive material affixing device according to a fourth aspect of the disclosure includes a grip that grips a proximal end portion of a plate member extending in one direction and configured to be heated, a pair of support members between which a film adhesive material is stretched, the pair of support members supporting the film adhesive material, a moving unit that moves the grip, bends the film adhesive material stretched between the pair of support members at an end face of the plate member gripped by the grip and wraps the film adhesive material over the end face and both plate surfaces of the plate member, one pressing unit that presses the film adhesive material against both of the plate surfaces of the plate member that is moved together with the grip by the moving unit, and another pressing unit that presses the film adhesive material against the end face of the plate member that has stopped moving.

The film adhesive material affixing device according a fifth aspect of the disclosure is the film adhesive material affixing device according to the fourth aspect, in which the one pressing unit includes the pair of rollers that sandwiches the moving plate member in a clamping portion.

The film adhesive material affixing device according to a sixth aspect of the disclosure is the film adhesive material affixing device according to the fifth aspect, in which the one pressing unit includes a biasing member that biases the pair of rollers toward the plate member. Advantageous Effects of Invention

According to the disclosure, it is possible to suppress air bubbles from entering between a film adhesive material and a member when affixing the film adhesive material to the member.

### BRIEF DESCRIPTION OF DRAWINGS

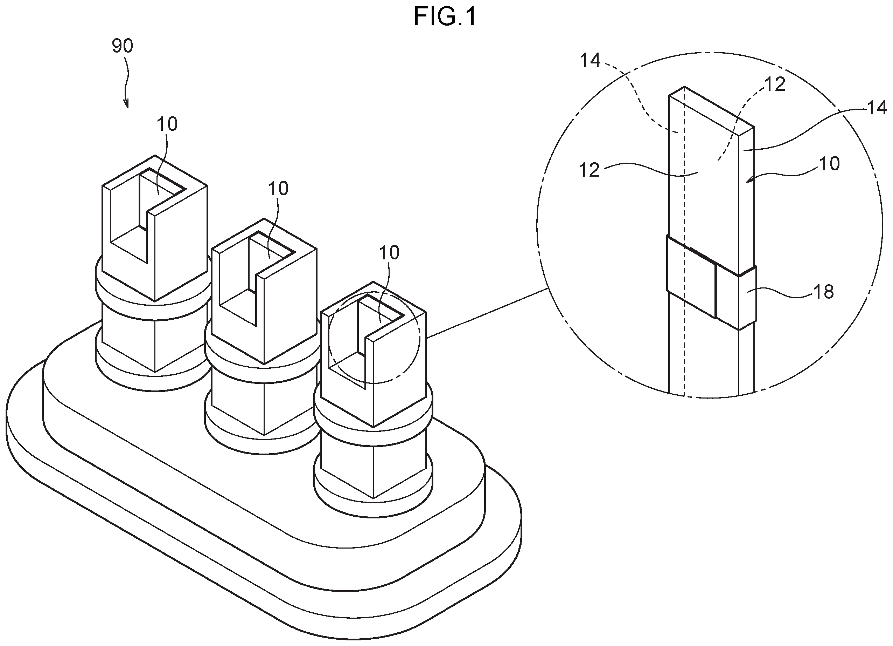

Fig. 1 illustrates a three-phase terminal block including a terminal to which a film adhesive material is stuck using a film adhesive material affixing method according to a first embodiment of the disclosure.

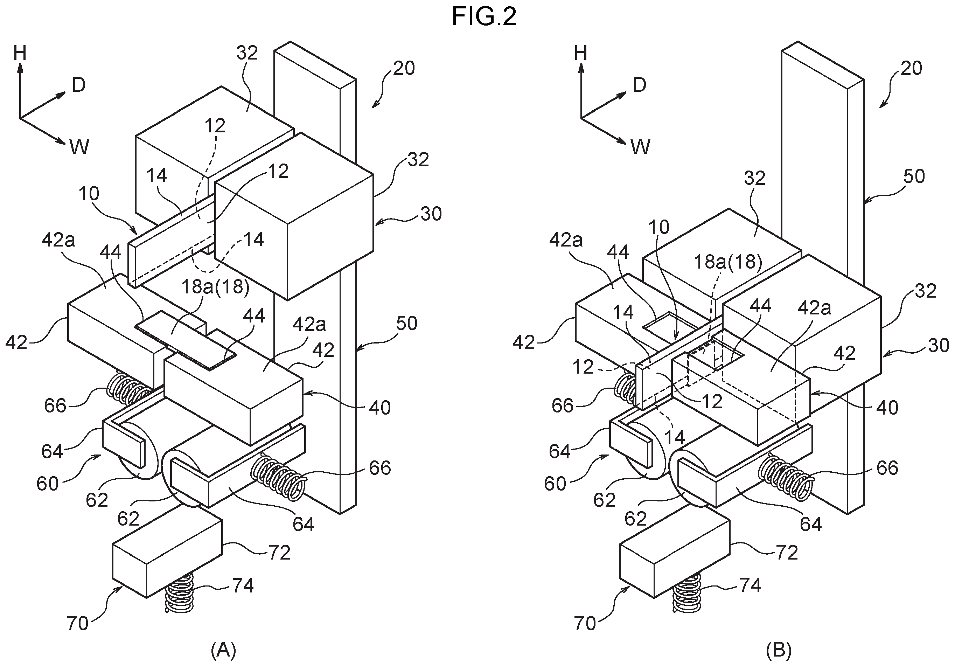

Figs. 2(A) and 2(B) are perspective views illustrating a film adhesive material affixing device used in the film adhesive material affixing method according to the first embodiment of the disclosure, illustrating a state in which the terminal is gripped by a grip and a state in which the film adhesive material is wrapped over the terminal.

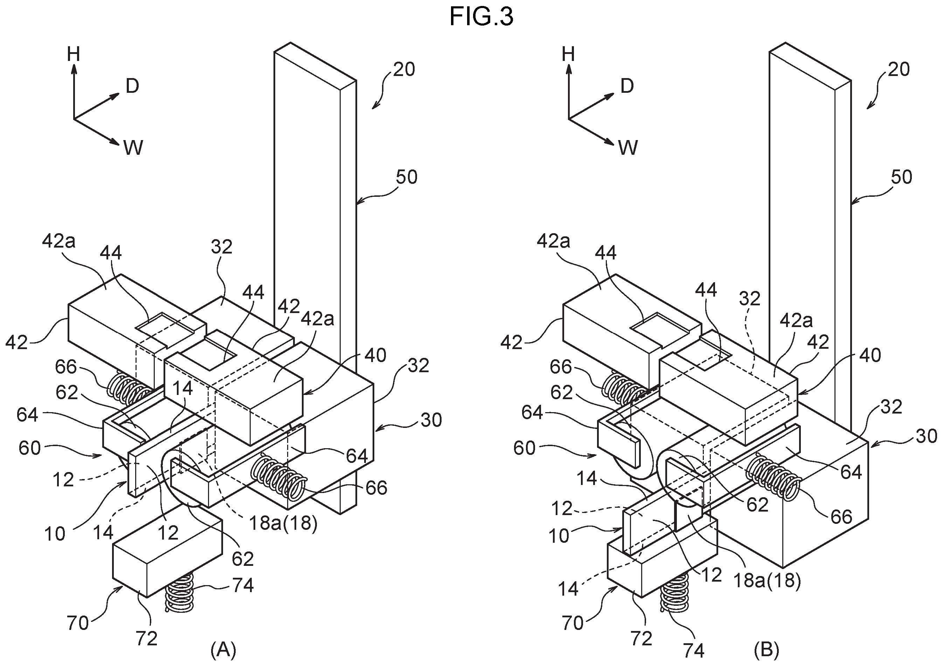

Figs. 3(A) and 3(B) are perspective views illustrating the film adhesive material affixing device used in the film adhesive material affixing method according to the first embodiment of the disclosure, illustrating a state in which the film adhesive material is pressed against a plate surface of the terminal and a state in which the film adhesive material is pressed against an end face of the terminal.

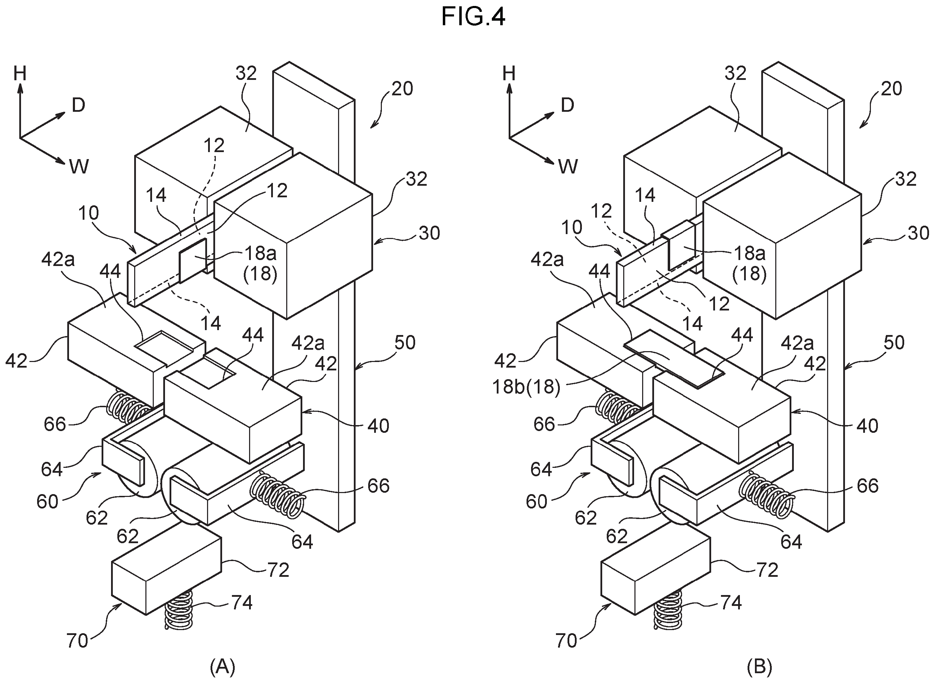

Figs. 4(A) and 4(B) are perspective views illustrating the film adhesive material affixing device used in the film adhesive material affixing method according to the first embodiment of the disclosure, illustrating a state in which the terminal is returned to an initial position and a state in which the terminal is gripped upside down by the grip.

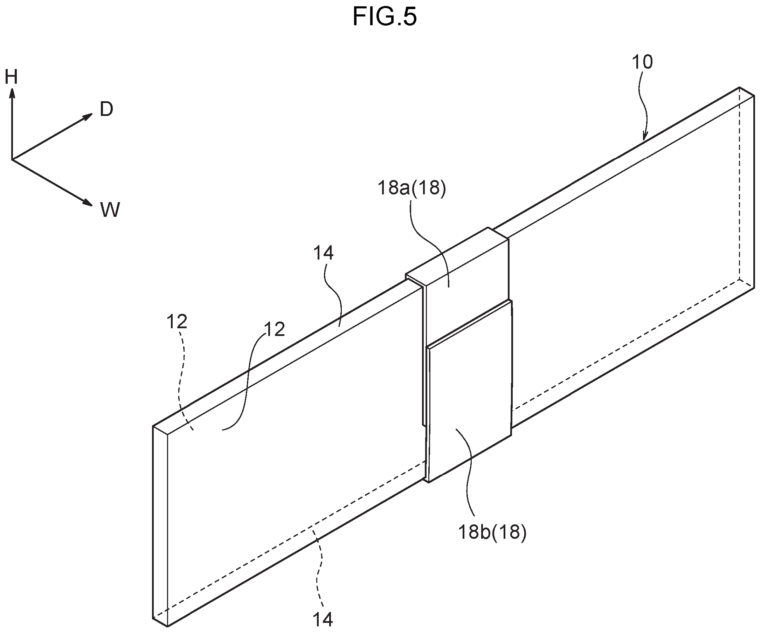

Fig. 5 is a perspective view illustrating the terminal to which the film adhesive material is stuck using the film adhesive material affixing method according to the first embodiment of the disclosure.

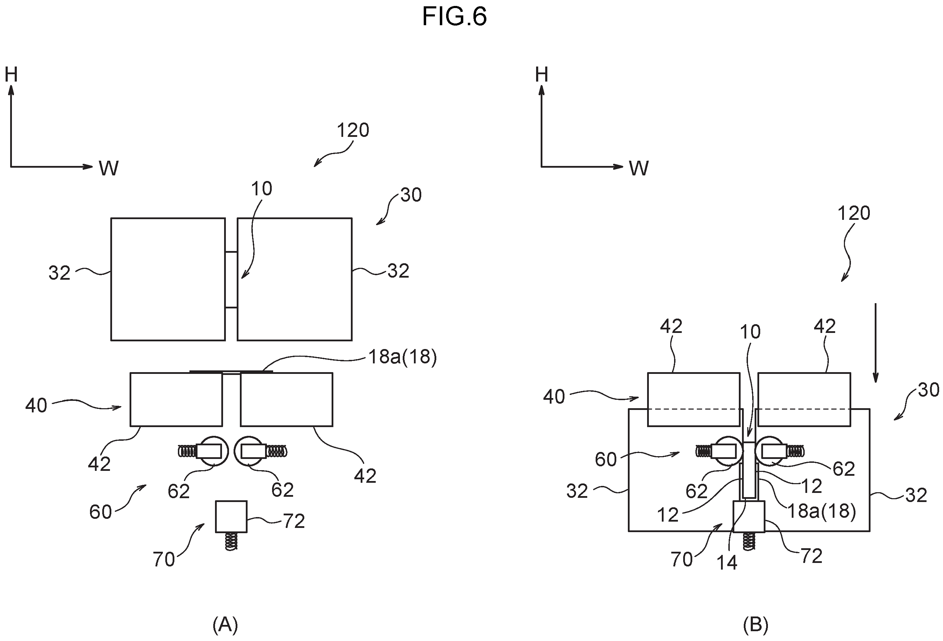

Figs. 6(A) and 6(B) are front views illustrating a film adhesive material affixing device used in a film adhesive material affixing method according to a second embodiment of the disclosure, illustrating a state in which a terminal is gripped by a grip and a state in which one film adhesive material is pressed against both plate surfaces and one end face of the terminal.

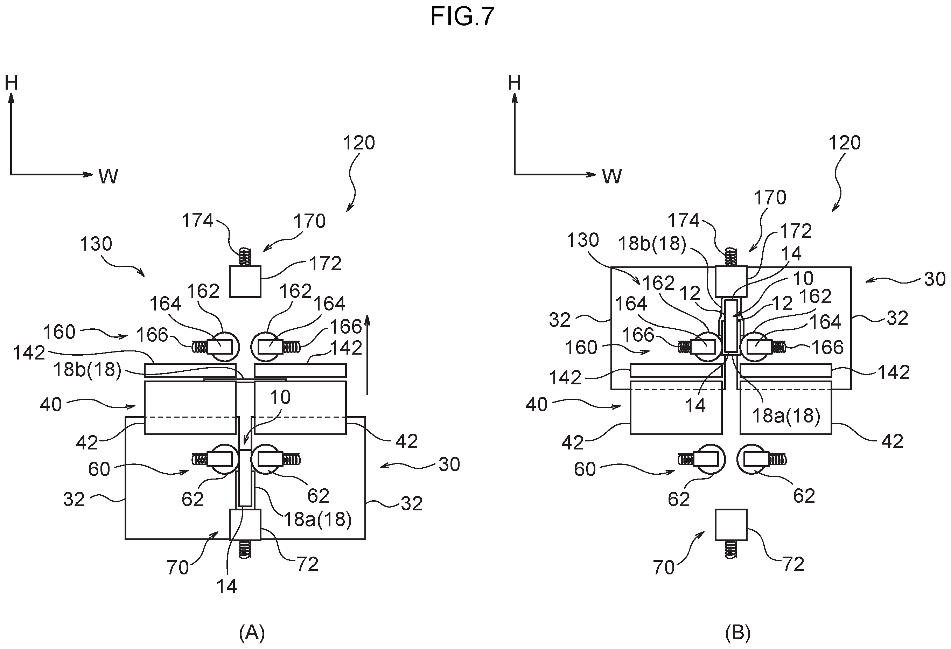

Figs. 7(A) and 7(B) are front views illustrating the film adhesive material affixing device used in the film adhesive material affixing method according to the second embodiment of the disclosure, illustrating a state in which a new mechanism is provided and a state in which another film adhesive material is pressed against both of the plate surfaces and the other end face of the terminal.

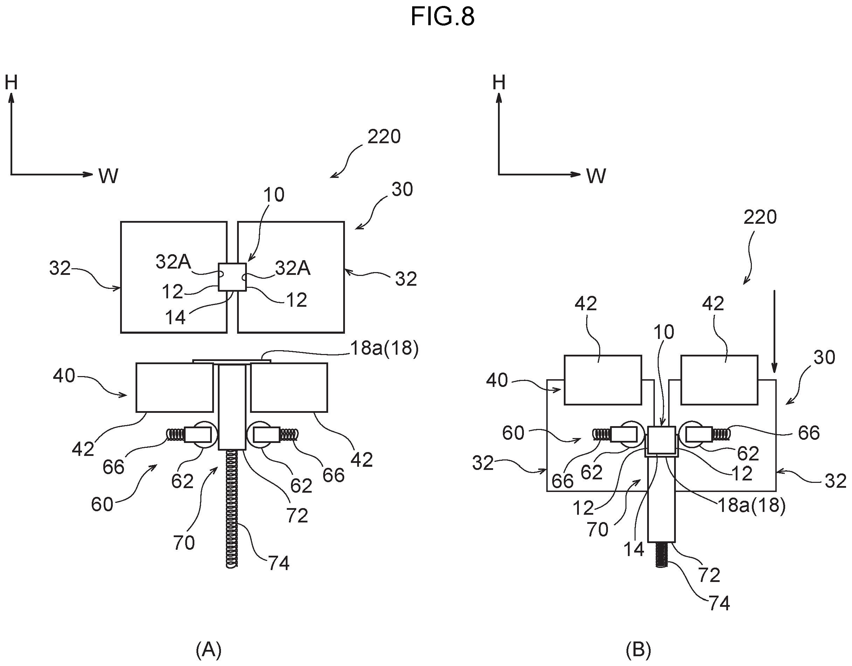

Figs. 8(A) and 8(B) are front views illustrating a film adhesive material affixing device used in a film adhesive material affixing method according to a third embodiment of the disclosure, illustrating a state in which a terminal is gripped by a grip and a state in which one film adhesive material is pressed against both plate surfaces and one end face of the terminal.

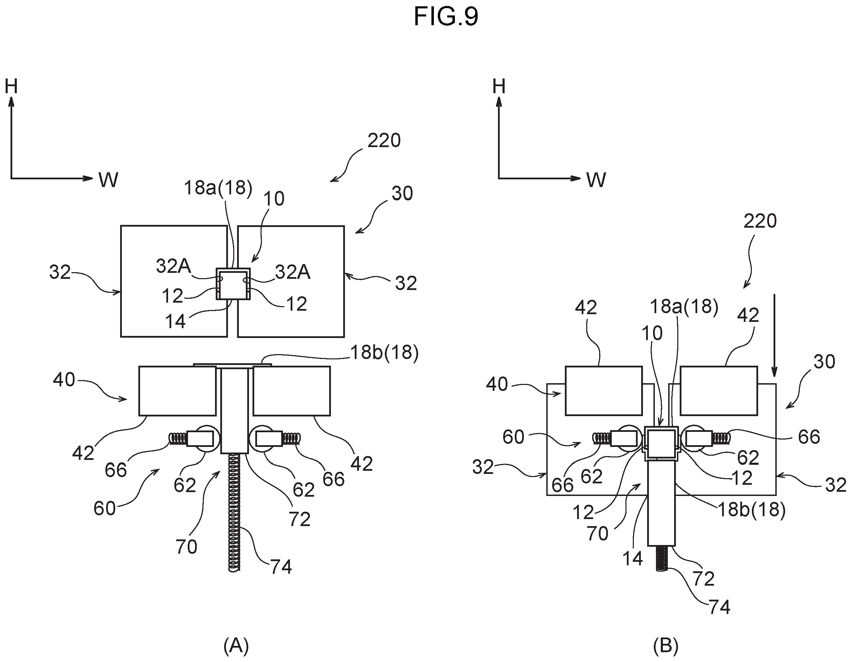

Figs. 9(A) and 9(B) are front views illustrating the film adhesive material affixing device used in the film adhesive material affixing method according to the third embodiment of the disclosure, illustrating a state in which the terminal is returned to an initial position, a state in which the terminal is gripped upside down by the grip, and a state in which another film adhesive material is pressed against both of the plate surfaces and the other end face of the terminal.

### DESCRIPTION OF EMBODIMENTS

### <First Embodiment>

An example of a film adhesive material affixing method and a film adhesive material affixing device according to a first embodiment of the disclosure will be described with reference to Figs. 1 to 5. An arrow H in the drawings indicates a device up-down direction (vertical direction), an arrow W indicates a device width direction (horizontal direction), and an arrow D indicates a device depth direction (horizontal direction).

A terminal 10 to which a film adhesive material 18 is stuck using the film adhesive material affixing method according to the first embodiment of the disclosure is used, for example, in a three-phase terminal block 90 illustrated in Fig. 1.

The film adhesive material 18 is a thin synthetic resin film formed using a thermoplastic resin, and is used for joining different types of materials. For the film adhesive material 18, for example, WelQuick (registered trademark) manufactured by Resonac Corporation can be used. In this embodiment, the thickness of the film adhesive material 18 is 0.05 [mm] as an example.

The terminal 10 is formed using a conductive material and has a plate shape extending in one direction as illustrated in Fig. 1, and a pair of plate surfaces 12 and a pair of end faces 14 sandwiching the pair of plate surfaces 12 in a transverse direction of the terminal 10 are formed on the terminal 10. The terminal 10 is an example of a plate member.

The film adhesive material 18 has a rectangular shape and is wrapped over a central portion in a longitudinal direction (one direction) of the terminal 10. The film adhesive material 18 wrapped over the terminal 10 is embedded in a housing made of resin of the three-phase terminal block 90, and the housing made of resin and the terminal 10 are joined.

The thickness of the film adhesive material 18 illustrated in each drawing is exaggerated in order to easily understand a state of the film adhesive material 18.

### (Overall Configuration of Film Adhesive Material Affixing Device 20)

As illustrated in Fig. 2(A), a film adhesive material affixing device 20 (hereinafter, a "affixing device 20") includes a grip 30 that grips the plate-shaped terminal 10, a support 40 that supports the film adhesive material 18, and a moving unit 50 that moves the grip 30 in the device up-down direction. The affixing device 20 further includes a pressing unit 60 that presses the film adhesive material 18 against the plate surface 12 of the terminal 10, and a pressing unit 70 that presses the film adhesive material 18 against the end face 14 of the terminal 10.

### [Grip 30]

As illustrated in Fig. 2(A), the grip 30 is arranged in an upper portion of the affixing device 20 at an initial position before the operation of the affixing device 20. The grip 30 includes a pair of grip blocks 32 separated in the device width direction, an approaching/separating mechanism (not illustrated), and a heating heater (not illustrated).

The pair of grip blocks 32 is formed in a rectangular parallelepiped shape using a metal material, and arranged in the device width direction. The pair of grip blocks 32 approaches and separates in the device width direction by the approaching/separating mechanism, and heated by the heating heater. In this embodiment, the pair of gripping blocks 32 is heated to 160 [°C] by the heating heater, for example.

In this configuration, the pair of grip blocks 32 sandwiches a proximal end portion of the terminal 10 and grips the terminal 10 so that the terminal 10 protrudes to a front side in the device depth direction. Specifically, the pair of grip blocks 32 sandwiches the proximal end portion of the terminal 10 with the longitudinal direction (one direction) in the device depth direction and the plate thickness direction in the device width direction. The pair of grip blocks 32 grips the terminal 10 so that the terminal 10 protrudes to the front side in the device depth direction. The heated grip block 32 heats the terminal 10.

### [Support 40]

As illustrated in Fig. 2(A), the support 40 is arranged below a portion of the terminal 10 protruding from the pair of grip blocks 32. The support 40 includes a pair of support blocks 42 separating in the device width direction. The support block 42 is an example of a support member.

The pair of support blocks 42 is formed in a rectangular parallelepiped shape using a metal material, and arranged with a gap in the device width direction. A regulation recess 44 for regulating a support position of the film adhesive material 18 is formed on an upper surface 42a of each of the pair of support blocks 42.

In this embodiment, as an example, the gap between the pair of support blocks 42 is 1.5 times the plate thickness of the terminal 10. That is, in a case where the thickness of the terminal 10 is 2 [mm], the gap between the pair of support blocks 42 is 3 [mm].

In this configuration, the film adhesive material 18 is placed on the regulation recesses 44 formed on the upper surfaces 42a of the pair of support blocks 42. As a result, the film adhesive material 18 positioned by the regulation recesses 44 is stretched and supported by the pair of support blocks 42.

### [Moving Unit 50]

The moving unit 50 includes a known mechanical element part, arranged on the back side in the device depth direction with respect to the grip 30, and extends in the device up-down direction as illustrated in Fig. 2(A). A portion on the back side in the device depth direction of the grip 30 is attached to the moving unit 50, and the moving unit 50 moves the grip 30 in the device up-down direction.

In this configuration, as illustrated in Figs. 2(A) and 2(B), the moving unit 50 moves the grip 30 at an initial position downward, thereby folding the film adhesive material 18 stretched between the pair of support blocks 42 at one end face 14 of the terminal 10 gripped by the grip 30. As a result, the film adhesive material 18 is wrapped over one end face 14 and both of the plate surfaces 12.

### [Pressing Unit 60]

As illustrated in Fig. 2(A), the pressing unit 60 is arranged below the support 40, and includes a pair of rollers 62 and a pair of support members 64 that rotatably supports the pair of rollers 62. The pressing unit 60 further includes a biasing member 66 that biases the roller 62 via the support member 64. Biasing means applying a force in one direction. The pressing unit 60 is an example of one pressing unit.

### -Roller 62-

As illustrated in Fig. 2(A), a pair of rollers 62 is provided, and is arranged with a gap in the device width direction with an axial direction in the device depth direction. In this embodiment, as an example, the gap between the pair of rollers 62 is 0.5 times the plate thickness of the terminal 10. That is, in a case where the thickness of the terminal is 2 [mm], the gap between the pair of rollers 62 is 1 [mm]. By providing the gap between the pair of rollers 62 in this manner, damage to the film adhesive material 18 is suppressed.

An outer peripheral portion of the roller 62 is formed using a silicone resin, and hardness of this portion is Shore A hardness 50. In this manner, since the outer peripheral portion of the roller 62 is formed using the silicon resin, the film adhesive material 18 is suppressed from affixing to the roller 62. Forming the outer peripheral portion of the roller 62 using the silicone resin is an example, and other materials may be used for the outer peripheral portion of the roller 62 as long as the film adhesive material 18 can be suppressed from affixing to the outer peripheral portion of the roller 62.

### -Support Member 64-

As illustrated in Fig. 2(A), a pair of support members 64 is provided, and one support member 64 has a U shape with the other support member 64 side opened. The roller 62 is rotatably supported by both end portions of the support member 64.

### -Biasing Member 66-

As illustrated in Fig. 2(A), a pair of biasing members 66 is provided, and arranged on an outer side in the device width direction with respect to the roller 62. Specifically, the biasing member 66 is a compression coil spring and is arranged so as to extend in the device width direction, one end of the biasing member 66 is attached to the support member 64, and the other end of the biasing member 66 is attached to a frame member not illustrated.

In this configuration, when the terminal 10 moved by the moving unit 50 is sandwiched in a clamping portion of the pair of rollers 62, as illustrated in Fig. 3(A), the film adhesive material 18 is pressed against the plate surface 12 of the terminal 10 by a biasing force of the biasing member 66. In this embodiment, a pressing force by which the film adhesive material 18 is pressed against the plate surface 12 of the terminal 10 by the biasing member 66 is, for example, 5 [N]. The clamping portion is a portion in which the pair of rollers 62 faces each other.

Relative positions in the device up-down direction of the roller 62 and the support block 42 are determined in such a manner that the film adhesive material 18 is separated from the support block 42 after the terminal 10 is sandwiched in the clamping portion of the pair of rollers 62.

### [Pressing Unit 70]

As illustrated in Fig. 2(A), the pressing unit 70 is arranged below the pressing unit 60, and includes a pressing base 72 and a biasing member 74 that biases the pressing base 72 toward the terminal 10. The pressing unit 70 is an example of other pressing units.

### -Pressing Base 72-

As illustrated in Fig. 2(A), the pressing base 72 has a rectangular parallelepiped shape extending in the device depth direction. An upper surface portion of the pressing base 72 is formed using a silicone resin, and hardness of this portion is Shore A hardness 50. In this manner, since the upper surface portion of the pressing base 72 is formed using the silicon resin, the film adhesive material 18 is suppressed from affixing to the pressing base 72. Forming using the silicone resin is an example, and other materials may be used as long as the film adhesive material 18 can be suppressed from affixing to the upper surface portion of the pressing base 72.

### -Biasing Member 74-

As illustrated in Fig. 2(A), the biasing member 74 is arranged below the pressing base 72. Specifically, the biasing member 74 is a compression coil spring and is arranged so as to extend in the device up-down direction, one end of the biasing member 74 is attached to the pressing base 72, and the other end of the biasing member 74 is attached to a frame member not illustrated.

In this configuration, when the moving unit 50 presses the moving terminal 10 against the pressing base 72, this stops the moving grip 30. As a result, as illustrated in Fig. 3(B), the film adhesive material 18 is pressed against the end face 14 of the terminal 10 by the biasing force of the biasing member 74. In this embodiment, the pressing force by which the film adhesive material 18 is pressed against the end face 14 of the terminal 10 by the biasing member 74 is, for example, 5 [N].

### (Action)

Next, the film adhesive material affixing method (hereinafter, "affixing method") of affixing one film adhesive material 18 and another film adhesive material 18 to the terminal 10 using the affixing device 20 will be described. For convenience of the following description, one film adhesive material 18 is referred to as a film adhesive material 18a, and another film adhesive material 18 is referred to as a film adhesive material 18b.

As illustrated in Fig. 2(A), the grip 30 is arranged in the upper portion of the affixing device 20 in an inoperative state of the affixing device 20. In this state, when the pair of grip blocks 32 approaches and is separated from each other using the approaching/separating mechanism, the pair of grip blocks 32 sandwiches the proximal end portion of the terminal 10 and grips the terminal 10. The terminal 10 is arranged so as to extend in the device depth direction in such a manner that the plate thickness direction of the terminal 10 is in the device width direction. The terminal 10 is heated by operating the heating heater provided in the pair of grip blocks 32.

As illustrated in Fig. 2(A), the film adhesive material 18a is placed on the regulation recesses 44 formed on the upper surfaces 42a of the pair of support blocks 42, and the pair of support blocks 42 supports the film adhesive material 18a in a positioned state. In this manner, the film adhesive material 18a is stretched between the pair of support blocks 42.

As illustrated in Fig. 2(B), the moving unit 50 moves the grip 30 gripping the terminal 10 downward. As a result, the film adhesive material 18a stretched between the pair of support blocks 42 is bent at one end face 14 of the terminal 10 that is moved together with the grip 30. The film adhesive material 18a is wrapped over one end face 14 and both of the plate surfaces 12 (wrapping step).

As illustrated in Fig. 3(A), the moving unit 50 moves the grip 30 gripping the terminal 10 downward. As a result, the moving terminal 10 is sandwiched in the clamping portion of the pair of rollers 62 and passes therethrough, so that the film adhesive material 18a is pressed against the plate surface 12 of the terminal 10 by the biasing force of the biasing member 66 (pressing step against the plate surface).

As illustrated in Fig. 3(B), the moving unit 50 moves the grip 30 gripping the terminal 10 downward, and when this presses the terminal 10 against the pressing base 72, this stops the moving grip 30. As a result, the film adhesive material 18a is pressed against the end face 14 of the terminal 10 by the biasing force of the biasing member 74 (pressing step against the end face).

As illustrated in Fig. 4(A), the moving unit 50 moves the grip 30 gripping the terminal 10 upward, thereby returning to the initial position. In this state, the film adhesive material 18a is stuck to one end face 14 and both of the plate surfaces 12 of the terminal 10.

Thereafter, the terminal 10 is separated from the grip 30, one end face 14 facing downward in the terminal 10 is directed upward, and the other end face 14 facing upward is directed downward. In this state, as illustrated in Fig. 4(B), the pair of grip blocks 32 sandwiches the proximal end portion of the terminal 10 to grip.

By placing the film adhesive material 18b on the regulation recesses 44 formed on the upper surfaces 42a of the pair of support blocks 42, the film adhesive material 18b in a positioned state on the pair of support blocks 42 is supported. In this manner, the film adhesive material 18b is stretched between the pair of support blocks 42.

By repeating the above-described operation, the film adhesive material 18 is wrapped over the terminal 10 as illustrated in Fig. 5. Specifically, the film adhesive material 18 is wrapped over the terminal 10 in a state in which both end portions of the film adhesive material 18a and both end portions of the film adhesive material 18b overlap each other on both of the plate surfaces 12 of the terminal 10.

### (Summary)

As described above, by the affixing method and the affixing device 20, the film adhesive material 18 is pressed against the plate surface 12 and the end face 14 of the terminal 10. As a result, by the affixing method and the affixing device 20, when the film adhesive material 18 is stuck to the terminal, air bubbles can be suppressed from entering between the terminal 10 and the film adhesive material 18.

By the affixing method and the affixing device 20, the moving terminal 10 is sandwiched in the clamping portion of the pair of rollers 62 at the pressing step against the plate surface, so that the film adhesive material 18 is pressed against both of the plate surfaces 12 of the terminal 10. As a result, by the affixing method and the affixing device 20, when the film adhesive material 18 is stuck to the terminal 10, air bubbles can be effectively suppressed from entering between the terminal 10 and the film adhesive material 18 as compared to a case where the film adhesive material 18 is pressed against the plate surface 12 of the terminal 10 using a pressing member that is not rotatable.

By the affixing method and the affixing device 20, the film adhesive material 18 is pressed against the plate surface 12 of the terminal 10 by the biasing force of the biasing member 66. As a result, by the affixing method and the affixing device 20, the film adhesive material 18 can be pressed against both of the plate surfaces 12 of the terminal 10 with a similar force over an entire plate surface 12.

### <Second Embodiment>

An example of a film adhesive material affixing method and a film adhesive material affixing device according to a second embodiment of the disclosure will be described with reference to Figs. 6 and 7. In the second embodiment, portions different from those of the first embodiment will be mainly described.

### (Overall Configuration of Film Adhesive Material Affixing Device 120)

As illustrated in Figs. 6(B) and 7(A), a film adhesive material affixing device 120 (hereinafter, a "affixing device 120") according to the second embodiment is provided with a moving unit 130 that is moved and arranged above a support 40 in a state in which a pressing base 72 presses a film adhesive material 18a against an end face 14 of a terminal 10. In Figs. 6 and 7, the moving unit 50 (refer to Fig. 2) is omitted.

The moving unit 130 is configured to be moved by a moving member not illustrated, and includes a pair of regulation blocks 142, a pressing unit 160, and a pressing unit 170 as illustrated in Fig. 7(A).

### [Regulation Block 142]

As illustrated in Fig. 7(A), the pair of regulation blocks 142 is provided. The pair of regulation blocks 142 is provided above a pair of support blocks 42, and is arranged with a gap from the support blocks 42. As a result, the regulation block 142 regulates a portion of a film adhesive material 18 stretched between the support blocks 42, the portion in contact with the support blocks 42, from floating upward.

### [Pressing Unit 160]

As illustrated in Fig. 7(A), the pressing unit 160 is arranged above the regulation block 142. The pressing unit 160 has a configuration similar to that of the pressing unit 60, and includes a pair of rollers 162, a pair of support members 164 that rotatably supports the pair of rollers 162, and a biasing member 166 that biases the roller 162 toward the terminal 10 via the support member 64. The pressing unit 160 is an example of one pressing unit.

### [Pressing Unit 170]

As illustrated in Fig. 7(A), the pressing unit 170 is arranged above the pressing unit 160. The pressing unit 170 is configured to be upside down with respect to the pressing unit 70, and includes a pressing base 172 and a biasing member 174 that biases the pressing base 172 toward the terminal 10. The pressing unit 170 is an example of other pressing units.

### (Action)

Next, the affixing method of affixing the film adhesive material 18a and the film adhesive material 18b to the terminal 10 using the affixing device 120 will be described.

As illustrated in Figs. 6(A) and 6(B), by moving the terminal 10 downward, the film adhesive material 18a is stuck to one end face 14 and both plate surfaces 12 of the terminal 10.

As illustrated in Figs. 6(B) and 7(A), the film adhesive material 18b is supported by the pair of support blocks 42. The moving unit 130 is moved and arranged above the support unit 40 by a moving member not illustrated.

As illustrated in Figs. 7(A) and 7(B), by moving the terminal 10 upward, the film adhesive material 18b is stuck to the other end face 14 and both of the plate surfaces 12 of the terminal 10. In this manner, the film adhesive material 18 is wrapped over the terminal 10 in a state in which both end portions of the film adhesive material 18a and both end portions of the film adhesive material 18b overlap each other on both of the plate surfaces 12 of the terminal 10 (refer to Fig. 5).

### <Third Embodiment>

An example of a film adhesive material affixing method and a film adhesive material affixing device according to a third embodiment of the disclosure will be described with reference to Figs. 8 and 9. In this embodiment, since a cross-sectional shape of a terminal 10 is different from that of the first embodiment, a configuration of a affixing device 220 is also different. In this embodiment, portions different from those of the first embodiment will be mainly described.

The terminal 10 is, for example, a bus bar, and has a rectangular cross section in a transverse direction, for example, a substantially square cross section. That is, a plate member includes not only a flat member as the terminal 10 of the first embodiment and the second embodiment but also a bar-shaped member.

A grip block 32 in a grip 30 has a recess 32A into which the terminal 10 is fitted. A gap between a pair of support blocks 42 in a support 40 is set to be larger than the thickness of the terminal 10 by, for example, about 1 to 2 [mm]. As illustrated in Fig. 8(A), when the terminal 10 is above the support 40, a pressing base 72 is positioned from between the pair of support blocks 42 to between a pair of rollers 62 in the up-down direction. The height of a top surface of the pressing base 72 at that time is, for example, the same as the height of a bottom surface of the film adhesive material 18a. The width of the pressing base 72 is, for example, the same as the width of the terminal 10.

### (Action)

Next, the affixing method of affixing the film adhesive material 18a and the film adhesive material 18b to the terminal 10 using the affixing device 120 will be described.

As illustrated in Figs. 8(A) and 8(B), by moving the terminal 10 gripped by the recesses 32A in the pair of grip blocks 32 downward, the film adhesive material 18a is stuck to one end face 14 and both plate surfaces 12 of the terminal 10. At that time, the film adhesive material 18 is pressed against the one end face 14 of the terminal 10 by the pressing base 72 that receives a biasing force of a biasing member 74, and is pressed against the plate surface 12 of the terminal 10 by the roller 62 that receives a biasing force of a biasing member 66.

Next, as illustrated in Figs. 9(A) and 9(B), the terminal 10 is separated from the grip 30, one end face 14 facing downward in the terminal 10 is directed upward, and the other end face 14 facing upward is directed downward. In this state, the recesses 32A of the pair of grip blocks 32 sandwich the proximal end portion of the terminal 10 to grip.

By placing the film adhesive material 18b on the regulation recesses 44 (Fig. 4) formed on the upper surfaces 42a of the pair of support blocks 42, the film adhesive material 18b in a positioned state on the pair of support blocks 42 is supported. In this manner, the film adhesive material 18b is stretched between the pair of support blocks 42.

By repeating the above-described operation, the film adhesive material 18 is wrapped over the terminal 10. Specifically, the film adhesive material 18 is wrapped over the terminal 10 in a state in which both end portions of the film adhesive material 18a and both end portions of the film adhesive material 18b overlap each other on both of the plate surfaces 12 of the terminal 10.

In this embodiment, unlike a case where the film 18a is pressed against both of the plate surfaces 12 of the terminal 10 and then the film 18a is pressed against the end face 14 as in the first embodiment, the film 18a is pressed against the end face 14 from an initial stage of affixing. Therefore, even if the end face 14 has a width that is large to some extent, air bubbles can be suppressed from entering between the terminal 10 and the film adhesive material 18.

Although the disclosure has been described in detail with respect to specific embodiments, the disclosure is not limited to such embodiments, and it is apparent to those skilled in the art that various other embodiments can be taken within the scope of the disclosure. For example, in the above-described embodiment, the terminal 10 is heated by the grip 30, but the previously heated terminal 10 may be gripped by the grip.

In the above-described embodiment, the film adhesive material 18 is wrapped over the terminal 10 formed using the metal material, but the film adhesive material 18 may be wrapped over a member formed using another material.

In the above-described embodiment, the terminal 10 extends in the device depth direction (one direction), but it is sufficient that the terminal of the portion over which the film adhesive material 18 is wrapped extends in one direction.

In the first embodiment, the film adhesive material 18 is wrapped over the terminal 10 by the movement of the grip 30, but the film adhesive material 18 may be wrapped over the terminal 10 by the movement of the support 40, the pressing unit 60, and the pressing unit 70 without the movement of the grip 30. That is, the film adhesive material 18 may be wrapped over the terminal 10 by relatively moving the grip 30, the pressing unit 60, and the pressing unit 70.

The disclosure of the Japanese Patent Application 2023-116931 filed on July 18, 2023 is incorporated herein by reference in their entirety.

All documents, patent applications, and technical standards described in this specification are incorporated herein by reference to the same extent as if each document, patent application, and technical standard were specifically and individually described to be incorporated by reference.

## Claims

1. A film adhesive material affixing method comprising:
a step of wrapping one film adhesive material over one end face and both plate surfaces of a heated plate member extending in one direction;
a step of pressing the one film adhesive material against both of the plate surfaces;
a step of pressing the one film adhesive material against the one end face;
a step of wrapping another film adhesive material over another end face and both of the plate surfaces of the heated plate member and overlapping the other film adhesive material and the one film adhesive material on both of the plate surfaces;
a step of pressing the other film adhesive material against both of the plate surfaces; and
a step of pressing the other film adhesive material against the other end face.

2. The film adhesive material affixing method according to claim 1, wherein
at the step of pressing the one film adhesive material against both of the plate surfaces and the step of pressing the other film adhesive material against both of the plate surfaces, the one film adhesive material and the other film adhesive material are pressed against both of the plate surfaces by causing the plate member to pass through a clamping portion of a pair of rollers.

3. The film adhesive material affixing method according to claim 2, wherein
the one film adhesive material and the other film adhesive material are pressed against both of the plate surfaces by biasing the pair of rollers toward the plate member.

4. A film adhesive material affixing device comprising:
a grip that grips a proximal end portion of a plate member extending in one direction and configured to be heated;
a pair of support members between which a film adhesive material is stretched, the pair of support members supporting the film adhesive material;
a moving unit that moves the grip, bends the film adhesive material stretched between the pair of support members at an end face of the plate member gripped by the grip, and wraps the film adhesive material over the end face and both plate surfaces of the plate member;
one pressing unit that presses the film adhesive material against both of the plate surfaces of the plate member that is moved together with the grip by the moving unit; and
another pressing unit that presses the film adhesive material against the end face of the plate member that has stopped moving.

5. The film adhesive material affixing device according to claim 4, wherein
the one pressing unit includes the pair of rollers that sandwiches the moving plate member in a clamping portion.

6. The film adhesive material affixing device according to claim 5, wherein
the one pressing unit includes a biasing member that biases the pair of rollers toward the plate member.
